# EUROPEAN PATENT APPLICATION

(11) **EP 3 185 627 A1**
(43) Date of publication of application: **28.06.2017**
(21) Application number: 15202194.5
(22) Date of filing: 22.12.2015
(51) Int. Cl.: H04W 64/00

(54) **METHOD AND SYSTEM FOR DETERMINING A SPATIAL TOPOLOGY OF A WIRELESS CONFERENCING NETWORK**

(71) Applicant: Televic Conference NV, 8870 Izegem (BE)
(72) Inventor: GESQUIERE, John, B-8970 Poperinge (BE); SOUBRY, Vincent, B-8870 Izegem (BE); CARDOEN, Pieter, B-8980 Passendale (BE); VLAEMYNCK, Stefaan, B-8730 Beernem (BE); NAESSENS, Frederik, B-8800 Roeselare (BE)
(74) Representative: Beck, Michaël Andries T.

(57) **Abstract**

The invention pertains to a method for determining a spatial topology of a wireless network comprising a plurality of conference terminals, the method comprising: obtaining a plurality of values indicative of a distance or an angle between pairs of conference terminals from among said plurality of conference terminals, said plurality of values being obtained by analyzing signals exchanged between members of said respective pairs of conference terminals; combining said plurality of values to determine relative positions of said plurality of conference terminals, said relative positions forming said spatial topology. The invention also pertains to a corresponding computer program product and a corresponding system.

## Description

### Field of the Invention

The present invention pertains to the field of wireless networks, in particular wireless conferencing systems.

### Background

In conferencing systems, conference terminals (or "delegate units") allow individual delegates to transmit and receive audio and optionally video, in particular delegates' speech and/or translations thereof, and data to and from each other, optionally via one or more centralized servers or access points.

In wireless conferencing systems, a relatively large number of conference terminals must be able to communicate with each other and/or with an access point via radio waves in a limited space.

A wireless conferencing system of this type is described in unpublished European patent application no. 15160935.1, filed on 25 March 2015, in the name of the present applicant.

When the terminals are connected by means of a wireless network, they are easily moved around from time to time, which may make it difficult for an operator such as the chairperson or the conference organizer to keep track of which terminal is being used by which delegate. Hence, there is a need for a method or a system that facilitates tracking of movable wireless conference terminals.

It is an object of embodiments of the present invention to facilitate location tracking of movable wireless conference terminals.

### Summary of the invention

According to an aspect of the present invention, there is provided a method for determining a spatial topology of a wireless network comprising a plurality of conference terminals, the method comprising: obtaining a plurality of values indicative of a distance or an angle between pairs of conference terminals from among the plurality of conference terminals, the plurality of values being obtained by analyzing signals exchanged between members of the respective pairs of conference terminals; combining the plurality of values to determine relative positions of the plurality of conference terminals, the relative positions forming the spatial topology.

It is an advantage of the present invention that it generates a spatial topology of the conference terminals, i.e. a map showing where each conference terminal is physically located, with a minimum of signal exchanges and without human intervention. The topology information obtained in this manner may be used to facilitate equipment tracking and configuration, increase security, improve the user interface of the chairperson's or the administrator's unit, and generally conduct meetings more efficiently.

In an embodiment, the method according to the present invention further comprises displaying a graphical representation of the spatial topology as a map in a graphical user interface.

It is an advantage of this embodiment that a user, typically a chairperson or a system administrator, can refer to a visual representation of the conference floor, showing the terminals in their true (relative) physical positions, and select individual terminals on which management tasks must be performed (e.g., muting a microphone, starting a recording function, sending a signal, etc.) on the basis of this visual representation. In this way, the selection of the appropriate terminal is rendered more intuitive, and mistakes can be reduced.

In a particular embodiment, the obtaining and the combining are performed periodically, and the displayed graphical representation is updated when the relative positions have changed.

It is an advantage of this embodiment that the graphical representation of the topology remains up to date, even as terminals are being moved around during the conference.

In an embodiment, the method according to the present invention further comprises using the spatial topology to determine a spanning tree for relaying messages within the wireless network.

Spanning tree protocols are used in networks that rely on the relaying (bridging) of messages to avoid forwarding loops. In mesh-type networks, each network end point is potentially a forwarding point (bridge), and must be involved in the determination of the spanning tree. It is an advantage of mesh networks with a spanning tree that they provide a logical network topology in which every conference terminal is able to communicate with every other conference terminal, either directly or through other conference terminals, without having any loops in the network. The various paths (or directions) that may be available for transmission between a conference terminal and its peers are treated as different links for the purpose of the spanning tree protocol, each of which is assigned a different cost or weight. Depending on the application, this cost or weight may take into account signal-to-noise ratio, available bitrate, bit error rate, latency, link stability, and similar metrics. It is an advantage of this embodiment of the invention, that spatial topology information is taken into account to determine a candidate spanning tree. This embodiment is based on the insight that the metrics of interest, such as signal-to-noise ratio, available bitrate, bit error rate, latency, and link stability, all tend to be distance-dependent, such that a distance between terminals obtained from the topology information may be considered a good predictor of the relevant link metrics.

In an embodiment of the method according to the present invention, the conference terminals exchange the signals in an ISM band between 57 GHz and 66 GHz.

It is an advantage of this embodiment that it allows highly directional beam forming. It is a further advantage of this embodiment that it allows beams to bounce off walls, ceilings, or objects, thus increasing the chances of finding a path for direct wireless exchange between any two given locations in an indoor environment. It is a further advantage of this embodiment that it substantially confines the wireless transmissions to the indoor environment, which is a privacy benefit, as radio waves in this frequency range do not significantly traverse walls or structural elements. It is a further advantage of this embodiment that it uses an unlicensed band.

In an embodiment of the method according to the present invention, at least one of the values is indicative of an angle between a pair of conference terminals, the angle being determined by operating a first one of the pair of conference terminals in an omnidirectional mode and a second one of the pair of conference terminals in a directional mode and attempting to exchange signals while the transceiver of the second conference terminal is operated so as to vary a direction of operation.

The "directional mode" may be a beam-forming mode or a mode using a sectorial antenna to substantially direct the power at the output of the antenna in a particular direction.

It is an advantage of this embodiment, that it facilitates the generation of a topologically accurate map, because the topological information based on the inter-terminal distances (typically attenuation or time based) can be complemented with information about relative angles of arrival.

In a particular embodiment, at least one conference terminal from among the plurality of conference terminals comprises means to determine an absolute orientation, and wherein information pertaining to the absolute orientation is used in the combining to determine absolute positions of the plurality of conference terminals.

It is an advantage of this particular embodiment that the topology information, which would otherwise retain one unresolved degree of freedom (the overall orientation of the map), can be fixed in a correct absolute orientation.

In an embodiment, the method according to the present invention further comprises verifying whether each conference terminal from among the plurality of conference terminals meets a predetermined topological constraint, and generating an alarm signal if the verifying reveals that at least one conference terminal does not meet the topological constraint.

It is an advantage of this embodiment that the unauthorized removal of a conference terminal from the premises (theft), or the unauthorized use of a conference terminal outside the conference perimeter (eavesdropping) can be detected, allowing the conference organizers to take an appropriate measure.

In a particular embodiment, the method further comprises disabling the conference terminal that does not meet the topological constraint.

This is a particularly appropriate measure in response to the detection of an unauthorized conference terminal outside the conference perimeter, i.e. a suspected eavesdropper.

According to an aspect of the present invention, there is provided a computer program product comprising code means configured to cause a processor to carry out the steps of the method described above.

According to an aspect of the present invention, there is provided a system for determining a spatial topology of a wireless network comprising a plurality of conference terminals, the system comprising an interface for obtaining data from the plurality of conference terminals and a processor operatively connected to the interface, the processor being configured to carry out the steps of the method described above using values obtained through the interface.

The technical effects and advantages of the embodiments of the computer program product and the system according to the present invention correspond *mutatis mutandis* to those of the corresponding embodiments of the method according to the present invention.

### Brief Description of the Figures

These and other technical effects and advantages of embodiments of the present invention will now be further described with reference to the accompanying drawings, in which:
- Figure 1 provides a flow chart of a method according to an embodiment of the present invention; and
- Figure 2 provides diagrams of a system according to an embodiment of the present invention.

### Description of Embodiments

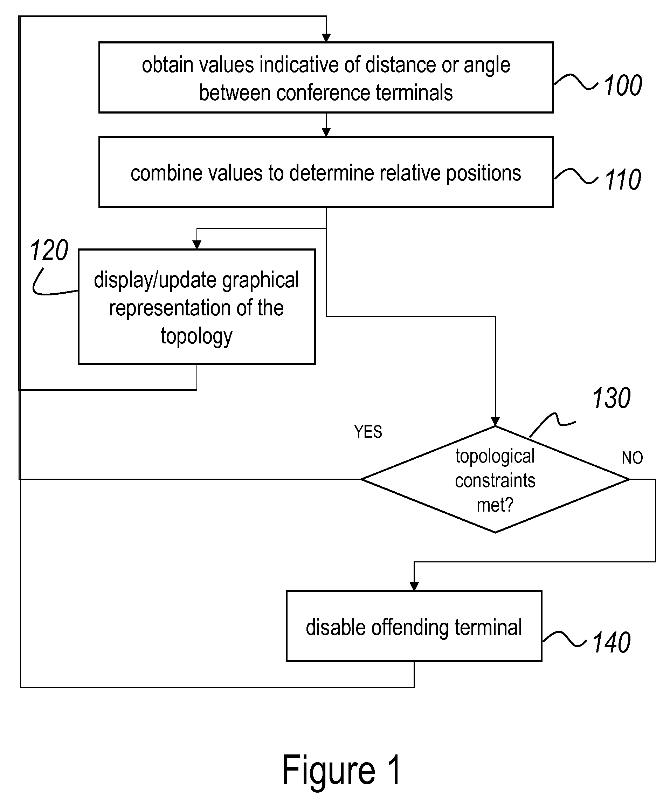

Figure 1 presents a flow chart of an embodiment of the method according to the present invention. The method may be carried out by a centralized computer, a chairperson's unit, an administrator's unit, a designated conference terminal, or the like; hereinafter, the entity performing the method will be referred to as the processing system, without loss of generality. The method comprises obtaining **100** a plurality of values indicative of a distance or an angle between pairs of conference terminals from among the plurality of conference terminals. These values are obtained by analyzing signals exchanged between members of the respective pairs of conference terminals. It is known that the delay and attenuation of signals transmitted through free space are distance-dependent, and this distance-dependence may advantageously be used to estimate the distance between two terminals. This estimation can be performed by (one of) the terminals participating in the exchange, and the estimate can be forwarded to the processing system, or the raw signal parameters can be forwarded to the processing system for estimation of the distance. In systems that have a way to transmit and/or receive signals in a strongly directional manner (this may be the case when using sectorial antennae, MIMO transmitters, short-wavelength communications, etc.), information about the angles under which signals could be exchanged between specific pairs of terminals may be shared with the processing system in the same manner.

The obtained values are combined **110** to determine relative positions of the plurality of conference terminals, the relative positions forming the spatial topology. The combination of distances and angles into a topological map is done on the basis of the basic rules of trigonometry, which are known to the person skilled in the art. Advantageously, the calculation may take into account the assumption that all conference terminals are substantially located in a common horizontal plane, such that the problem of reconstructing the topological map is substantially a two-dimensional problem.

A graphical representation of the spatial topology may be displayed **120** as a map in a graphical user interface. This graphical user interface may be part of a chairman's unit or an administrator's unit. Preferably, the map is shown in overlay on a photograph or video image of the conference room (after an appropriate perspective transformation), to make it intuitively clear to the user which delegate is associated with which terminal. This greatly facilitates the remote operation of the terminals by the chairperson or administrator.

As indicated by the arrows returning to step **100** in the illustrated flow chart, the obtaining **100** and the combining **120** are preferably performed periodically, and the optional displayed graphical representation **120** is updated when the relative positions have changed.

In a particularly advantageous embodiment, the conference terminals exchange the signals in an ISM band between 57 GHz and 66 GHz, which allows highly directional operation, and thus allows the retrieval of angular information. When at least one of the values to be used in the combining step **110** is indicative of an angle between a pair of conference terminals, the angle may be determined by operating a first one of the pair of conference terminals in an omnidirectional mode and a second one of the pair of conference terminals in a directional mode and attempting to exchange signals while the transceiver of the second conference terminal is operated so as to vary a direction of operation. Thus, one terminal of the pair performs an angular sweep of the room to find out at which angles communication with another terminal is possible; this procedure results in the detection of the angle under which the other terminal can be "seen".

Preferably, at least one conference terminal from among the plurality of conference terminals comprises means to determine an absolute orientation, such as an integrated compass, and information pertaining to the absolute orientation is used in the combining step **100** to determine absolute positions of the plurality of conference terminals. A single measurement of absolute direction can indeed suffice to remove the remaining degree of freedom that would otherwise remain in the topological information.

For security reasons, the method may further comprise verifying **130** whether each conference terminal meets a predetermined topological constraint, such as being within a certain distance from the chairperson's unit, being within a predefined perimeter, and the like. An alarm signal may be generated (not shown in the flow chart) if the verifying reveals that at least one conference terminal does not meet the topological constraint. The offending terminal may subsequently be disabled **140.**

The present invention also relates to a computer program product comprising code means configured to cause a processor to carry out the steps of the method described above. The computer program product may consist of the code means as provided on a computer-readable medium, including but not limited to magnetic, optical, or solid-state storage media.

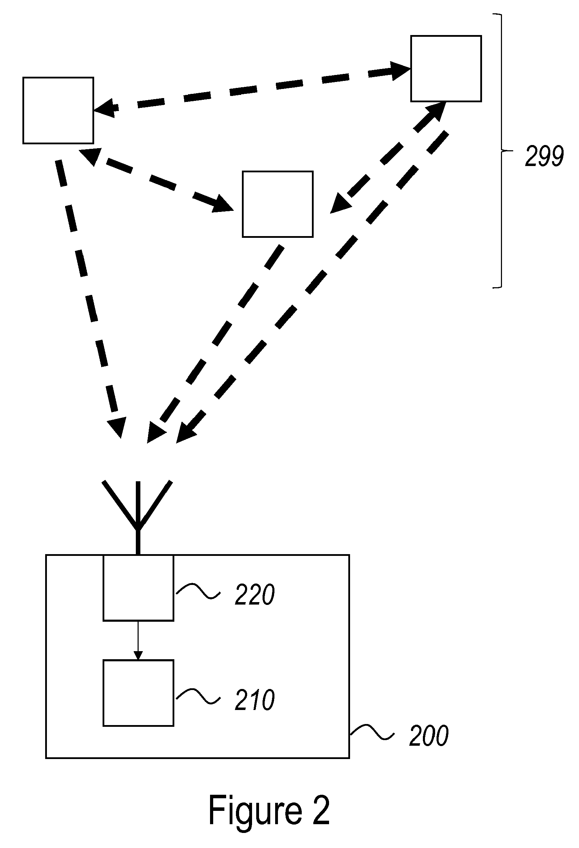

The present invention also relates to a system for determining a spatial topology of a wireless network comprising a plurality of conference terminals, an exemplary embodiment of which is illustrated in Figure 2. Such a system **200** may be integrated with a centralized computer, a chairperson's unit, an administrator's unit, a designated conference terminal, or the like, or it may be implemented as a stand-alone unit. The system comprises an interface **210** for obtaining data from the plurality of conference terminals **299** and a processor **220** operatively connected to the interface, the processor being configured to carry out the steps of the method described above using values obtained through the interface. All the optional features and details described above with reference to the method according to the invention, apply with the same effect to embodiments of the system according to the invention. The processor **220** may be implemented in dedicated hardware (e.g., ASIC), configurable hardware (e.g., FPGA), programmable components (e.g., a DSP or general purpose processor with appropriate software), or any combination thereof. The same component(s) may also include other functions.

While the invention has been described hereinabove with respect to some specific examples, this was done to illustrate and not to limit the invention, the scope of which is defined by the attached claims. The skilled person will understand that any features and advantages described in connection with the method of the present invention may also be applied to the system of the present invention, and vice versa.

## Claims

1. A method for determining a spatial topology of a wireless network comprising a plurality of conference terminals, the method comprising:
- obtaining (100) a plurality of values indicative of a distance or an angle between pairs of conference terminals from among said plurality of conference terminals, said plurality of values being obtained by analyzing signals exchanged between members of said respective pairs of conference terminals;
- combining (110) said plurality of values to determine relative positions of said plurality of conference terminals, said relative positions forming said spatial topology.

2. The method according to claim 1, further comprising:
- displaying a graphical representation of said spatial topology as a map in a graphical user interface.

3. The method according to claim 2, wherein said obtaining (100) and said combining (110) are performed periodically, and wherein said displayed graphical representation is updated (120) when said relative positions have changed.

4. The method according to any of the preceding claims, further comprising:
- using said spatial topology to determine a spanning tree for relaying messages within said wireless network.

5. The method according to any of the preceding claims, wherein said conference terminals exchange said signals in an ISM band between 57 GHz and 66 GHz.

6. The method according to any of the preceding claims, wherein at least one of said values is indicative of an angle between a pair of conference terminals, said angle being determined by operating a first one of said pair of conference terminals in an omnidirectional mode and a second one of said pair of conference terminals in a directional mode and attempting to exchange signals while said transceiver of said second conference terminal is operated so as to vary a direction of operation.

7. The method according to claim 6, wherein at least one conference terminal from among said plurality of conference terminals comprises means to determine an absolute orientation, and wherein information pertaining to said absolute orientation is used in said combining to determine absolute positions of said plurality of conference terminals.

8. The method according to any of the preceding claims, further comprising verifying (130) whether each conference terminal from among said plurality of conference terminals meets a predetermined topological constraint, and generating an alarm signal if said verifying reveals that at least one conference terminal does not meet said topological constraint.

9. The method according to claim 8, further comprising disabling (140) said conference terminal that does not meet said topological constraint.

10. A computer program product comprising code means configured to cause a processor to carry out the steps of the method according to any of claims 1-9.

11. A system for determining a spatial topology of a wireless network comprising a plurality of conference terminals, the system comprising an interface for obtaining data from said plurality of conference terminals and a processor operatively connected to said interface, the processor being configured to carry out the steps of the method according to any of claims 1-9 using values obtained through said interface.
